# EUROPÄISCHE PATENTSCHRIFT

(11) **EP 0 644 837 B1**
(45) Veröffentlichungstag und Bekanntmachung des Hinweises auf die Patenterteilung: **10.07.1996**
(21) Anmeldenummer: 93908913.2
(22) Anmeldetag: 06.04.1993
(51) Int. Cl.: B60T 13/567

(54) **BETÄTIGUNGSEINHEIT FÜR EINE HYDRAULISCHE KRAFTFAHRZEUGBREMSANLAGE**
ACTUATING UNIT FOR A HYDRAULIC VEHICLE BRAKING INSTALLATION
UNITE DE COMMANDE D'UN SYSTEME DE FREINAGE HYDRAULIQUE POUR VEHICULES AUTOMOBILES

(30) Priorität: 19.06.1992 DE 4220076
(43) Veröffentlichungstag der Anmeldung: 29.03.1995
(73) Patentinhaber: ITT Automotive Europe GmbH, D-60488 Frankfurt am Main (DE)
(72) Erfinder: GRAICHEN, Kai-Michael, D-6070 Langen (DE)
(86) Internationale Anmeldenummer: EP9300845
(87) Internationale Veröffentlichungsnummer: WO9400324

(56) Entgegenhaltungen:
- DE-A- 2 922 299
- GB-A- 2 044 375

## Beschreibung

Die Erfindung betrifft eine Betätigungseinheit für eine hydraulische Kraftfahrzeugbremsanlage, bestehend aus einem pneumatischen Bremskraftverstärker, vorzugsweise einem Unterdruckbremskraftverstärker sowie einem dem Bremskraftverstärker wirkungsmäßig nachgeschalteten Hauptbremszylinder, wobei der Bremskraftverstärker ein Verstärkergehäuse aufweist, dessen Innenraum durch eine auf einem ein Steuerventil aufnehmenden Steuergehäuse befestigte bewegliche Wand in zwei Kammern unterteilt ist und wobei ein mittig angeordnetes Kraftübertragungselement vorgesehen ist, das einerseits mit dem Hauptbremszylinder und anderereits mit einer Karosseriewand des Kraftfahrzeuges in kraftübertragender Verbindung steht.

Eine derartige Betätigungseinheit ist aus der deutschen Patentschrift DE 29 22 299 bekannt. Das Kraftübertragungselement des Bremskraftverstärkers der vorbekannten Betätigungseinheit ist als Tragrohr mit axialen Schlitzen ausgebildet, durch die hindurch die bewegliche Wand mit einem innerhalb des Tragrohrs angeordneten Teil des Steuergehäuses verbunden ist, das ein die Ausgangskraft des Bremskraftverstärkers übertragendes Ausgangsglied betätigt.

Weniger vorteilhaft anzusehen ist bei der bekannten Betätigungseinheit vor allem die komplizierte, aufwendige Art der Kraftübertragung von der beweglichen Wand auf das Ausgangsglied, die mittels an der beweglichen Wand ausgebildeter Zungen auf das oben erwähnte Steuergehäuseteil erfolgt, in dem das Ausgangsglied durch einen mit der beweglichen Wand verschraubten Haltering gehalten wird. Aus diesen Gründen wäre eine Tandemausführung nur mit sehr hohem Konstruktionsaufwand realisierbar.

Als nachteilig werden auch sowohl die erhebliche axiale Baulänge als auch das verhältnismäßig hohe Gewicht der bekannten Betätigungseinheit empfunden. Das hohe Gewicht ist vor allem auf das aus Metall hergestellte, massive Tragrohr sowie einen die bewegliche Wand bildenden Membranteller zurückzuführen, der, um hohe Verstärkungskräfte übertragen zu können, aus dickem Material bestehen muß.

Ein weiterer Nachteil wird schließlich darin gesehen, daß die Gestaltung des Tragrohrs von Kunden- bzw. fahrzeugspezifischem Flanschbildern für die Befestigung des Hauptbremszylinders am Verstärkergehäuse sowie die Befestigung des Bremskraftverstärkers an der Kraosseriewand abhängig ist, so daß für verschiedene Flanschbildkombinationen unterschiedliche Tragrohre benötigt werden.

Es ist daher Aufgabe der vorliegenden Erfindung, eine Betätigungseinheit der eingangs genannten Gattung vorzuschlagen, deren Aufbau eine Kosten- und Gewichtsreduzierung ermöglicht. Gleichzeitig sollen sowohl das Verstärkergehäuse als auch der Membranteller aus extrem dünnem Blech hergestellt werden können. Weiterhin soll der Einsatz der heute durchweg für mehrere Verstärkergrößen ausgelegten Steuergruppen mit fast allen und insbesondere den werkzeuggebundenen Bauteilen ohne konstruktive Änderungen gewährleistet werden. Außerdem soll durch die Erfindung eine einfache, kostengünstige Realisierung einer Tandemausführung ermöglicht werden.

Diese Aufgabe wird erfindungsgemäß dadurch gelöst, daß das Kraftübertragungselement durch einen durchgehenden Bolzen gebildet ist, der sich axial durch das Steuergehäuse hindurch erstreckt.

Die auf die karosseriewandseitige Verstärkergehäusehälfte einwirkenden Unterdruckkräfte sowie die Kräfte, die durch ein eventuelles Ziehen am Betätigungspedal oder durch Pedalschnalzen entstehen, werden wie bisher in die Karosseriewand eingeleitet, während alle anderen auftretenden Kräfte über den vom gewünschten Flanschbild unabhängigen, sowohl auf Zug als auch auf Druck beanspruchten Zentralbolzen aufgenommen und weitergeleitet werden.

Eine Erhöhung der Betriebssicherheit wird bei einer vorteilhaften Weiterbildung des Erfindungsgegenstandes dadurch erreicht, daß der Ventilkolben hülsenförmig ausgebildet, auf dem Bolzen geführt ist und mit seinem Ende am Betätigungspedal abgestützt ist. Bei der erwähnten Ausführung steht für den Ventilkolben eine große Führungslänge zur Verfügung, so daß eine Ausknickgefahr weitgehend eliminiert wird.

Eine weitere Ausgestaltung der Erfindung, bei der der Bremskraftverstärker eine im Steuergehäuse angeordnete elastische Reaktionsscheibe aufweist, die über eine mit einem im Hauptbremszylinder geführten Kolben in kraftübertragender Verbindung stehende Druckplatte eine Übertragung der Ausgangskraft des Bremskraftverstärkers auf den Kolben ermöglicht, zeichnet sich dadurch aus, daß die Reaktionsscheibe sowie die Druckplatte ringförmig ausgebildet und koaxial zum Bolzen auf einer auf dem Bolzen verschiebbar geführten Hülse angeordnet sind. Durch diese Maßnahme wird eine Verringerung der Ansprech-/Rückstellkrafthysterese erreicht.

Bei einer besonders kostengünstig herstellbaren Ausführungsform der Erfindung ist vorgesehen, daß die Übertragung der Ausgangskraft auf den Kolben mittels mindestens zweier symmetrisch parallel zum Bolzen zwischen dem Kolben und der Druckplatte angeordneter stabförmiger Teile erfolgt.

Eine Verbesserung der Kolbenführung wird nach einem weiteren vorteilhaften Erfindungsmerkmal dadurch erreicht, daß die Übertragung der Ausgangskraft auf den Kolben mittels eines bolzenförmigen Teils erfolgt, das in einem, radial gegenüberliegende Schlitze aufweisenden, hohlzylindrisch ausgebildeten Abschnitt des Bolzens geführt ist und an einem in der Druckplatte senkrecht angeordneten Stift axial anliegt. Das bolzenförmige Teil kann dabei vorzugsweise durch eine axiale Verlängerung des Kolbens gebildet sein.

Eine andere vorteilhafte Weiterbildung des Erfindungsgegenstandes sieht vor, daß das dem Hauptbremszylinder zugeordnete Ende des Bolzens mit einem den Hauptbremszylinder nach außen hin verschließenden Verschlußteil verbunden ist. Diese Maßnahme ermöglicht eine direkte Übertragung der Reaktionskräfte vom Hauptbremszylinder auf die Karosseriewand ohne zusätzliche Umlenkung.

Eine direkte Übertragung von auf die hauptbremszylinderseitige Verstärkergehäusehälfte einwirkenden, unterdruckbedingten pneumatischen Kräften auf die Karosseriewand wird erfindungsgemäß dadurch erreicht, daß das dem Hauptbremszylinder zugeordnete Ende des Bolzens mit einem topfförmigen Teil verbunden ist, das das ins Verstärkergehäuse hineinragende Ende des Hauptbremszylinders aufnimmt und mit der hauptzylinderseitigen Verstärkergehäusehälfte verbunden ist.

Das topfförmige Teil weist einen radialen Kragen auf, der einerseits der Befestigung des Teiles am Verstärkergehäuse und andererseits als Anlage für eine die bewegliche Wand entgegen der Betätigungsrichtung vorspannende Rückstellfeder dient, so daß eine gute Führung der Rückstellfeder gewährleistet ist.

Eine kostengünstige Vereinfachung der Konstruktion besteht darin, daß das topfförmige Teil mit der hauptzylinderseitigen Verstärkergehäusehälfte einteilig ausgebildet ist.

Eine Erhöhung der Torsionssteifigkeit des Betätigungspedals wird bei einer weiteren Ausgestaltung der Erfindung dadurch erreicht, daß das Betätigungspedal gabelförmig ausgebildet ist und zwei parallel im Abstand zueinander angeordnete Arme aufweist, zwischen denen der Bolzen sich erstreckt. Durch diese Maßnahme kann ein stabiles Betätigungspedal ohne Mehrgewicht gegenüber herkömmlichen Bremspedalen realisiert werden.

Eine wesentliche Vereinfachung der Montage der erfindungsgemäßen Betätigungseinheit wird dadurch erreicht, daß das Betätigungspedal an einem am Verstärkergehäuse befestigten Pedalbock schwenkbar gelagert ist, wobei der Karosseriewand zugeordnete Befestigungsmittel am Umfang des Verstärkergehäuses ausgebildet sind. Diese Maßnahmen ermöglichen Lieferungen von kompletten Baugruppen, die von Kraftfahrzeugherstellern in die Kraftfahrzeuge eingebaut werden können, ohne zusätzliche Kosten zu verursachen.

Eine optimale Ausnutzung des im Kraftfahrzeug vorhandenen Einbauraumes bietet eine andere Ausführungsvariante der Erfindung, bei der im montierten Zustand der Betätigungeinheit an der Karosseriewand diese zwischen dem Verstärkergehäuse und dem Pedalbock eingeklemmt ist.

Außerdem ist es besonders vorteilhaft, wenn das dem Hauptbremszylinder abgewandte Ende des Bolzens am Pedalbock verankert ist. Dadurch werden sämtliche, über den Bolzen übertragenen Kräfte auf eine einfache Art in die Karosseriewand weitergeleitet.

Eine funktionswichtige Verkürzung des bei der Betätigung auftretenden Leerweges wird schließlich dadurch erreicht, daß ein die Ruhestellung des Ventilkolbens festlegendes Querglied vorgesehen ist, das an einem das Verstärkergehäuse nach außen hin abdichtenden Dichtring axial anliegt.

Weitere Einzelheiten, Merkmale und Vorteile der Erfindung gehen aus der nachfolgenden Beschreibung von drei Ausführungsbeispielen unter Bezugnahme auf die beiliegende Zeichnung hervor, in der für einander entsprechende Einzelteile gleiche Bezugszeichen verwendet werden. Es zeigen:
- Fig. 1: eine erste Ausführung der erfindungsgemäßen Betätigungseinheit im Axialschnitt;
- Fig. 2: eine Ausführung des bei der erfindungsgemäßen Betätigungseinheit nach Fig. 1 verwendbaren Betätigungspedals;
- Fig. 3: den geringfügig modifizierten zentralen Bereich der in Fig. 1 gezeigten erfindungsgemäßen Betätigungseinheit in größerem Maßstab, teilweise weggebrochen, und
- Fig. 4: eine dritte Ausführung der erfindungsgemäßen Betätigungseinheit in einer der Fig. 3 entsprechenden Darstellung.

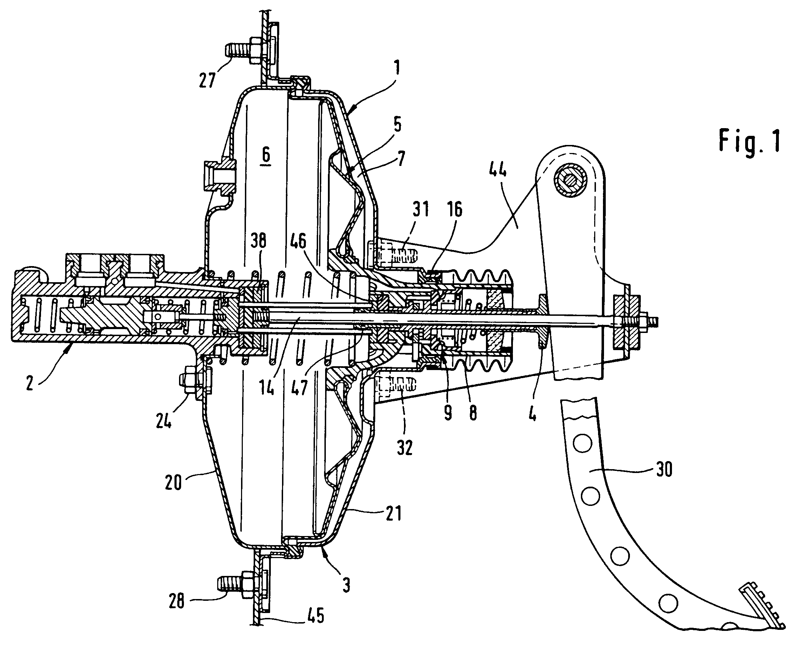

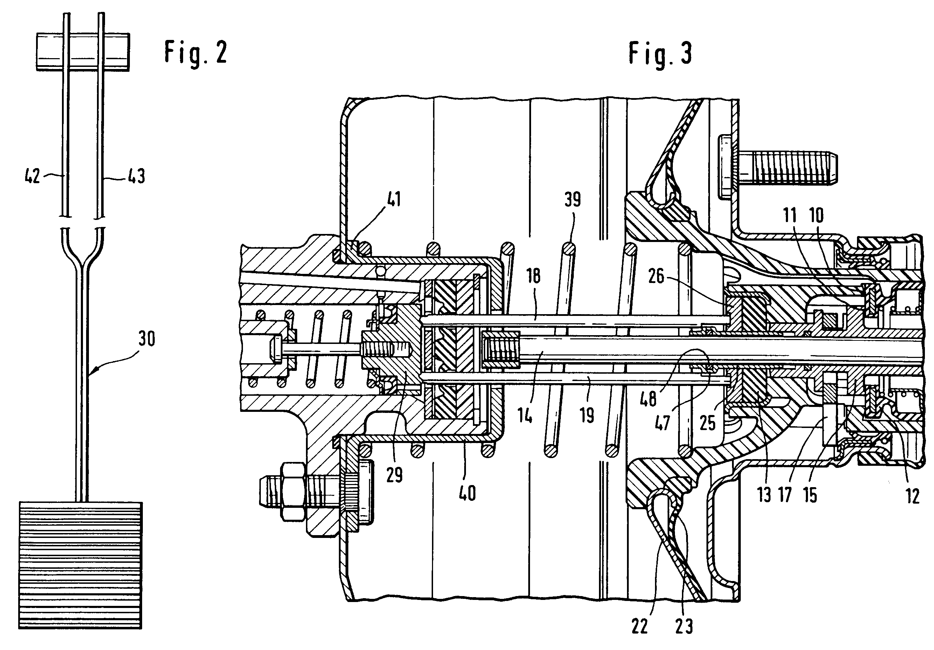

Die in der Zeichnung gezeigte erfindungsgemäße Betätigungseinheit besteht aus einem Unterdruckbremskraftverstärker 1 sowie einem ihm nachgeschalteten Hauptbremszylinder 2, vorzugsweise einem Tandemhauptzylinder. Der in Fig. 1 dargestellte Unterdruckbremskraftverstärker 1 weist ein durch zwei untereinander verbundene Gehäusehälften 20,21 gebildetes Verstärkergehäuse 3 auf, dessen links dargestellte Gehäusehälfte 20 den Tandemhauptzylinder 2 trägt, während die rechts dargestellte Gehäusehälfte 21 mittels an ihrem Umfang ausgebildeter Befestigungsmittel 27,28 an einer Karosseriewand 45 eines Kraftfahrzeuges befestigt ist. In einer nicht näher bezeichneten, zylindrisch gestalteten Verlängerung der rechten Gehäusehälfte 21 ist in einem Gleitdichtring 16 ein Steuergehäuse 8 verschiebbar geführt, in dem ein Steuerventil 9 angeordnet ist, das mittels eines an einem Betätigungspedal 30 axial anliegenden Eingangsgliedes 4 betätigbar ist. An seinem dem Eingangsglied 4 abgewandten Ende trägt das Steuergehäuse 8 eine durch einen Membranteller 22 sowie eine daran anliegende Rollmembran 23 gebildete bewegliche Wand 5, die das Innere des Bremskraftverstärkergehäuses 3 in eine evakuierbare Unterdruckkammer 6 sowie eine Arbeitskammer 7 unterteilt, wobei das Steuerventil 9 eine Verbindung zwischen der Arbeitskammer 7 und der Unterdruckkammer 6 oder der Atmosphäre ermöglicht. Wie insbesondere der Fig. 3 zu entnehmen ist, ist das Steuerventil 9 dabei vorzugsweise durch zwei koaxial zueinander angeordnete ringförmige Dichtsitze 10,11 gebildet, die mit einem rotationssymmetrischen elastischen Ventilkörper 12, beispielsweise einem Tellerventil, zusammenwirken bzw. in Lösestellung des Unterdruckbremskraftverstärkers 1 daran anliegen. Der erste Dichtsitz 10, dessen Öffnen eine Verbindung der beiden Kammern 6,7 miteinander ermöglicht, ist dabei im Steuergehäuse 8 ausgebildet. Der zweite Dichtsitz 11, dessen Öffnen eine Belüftung der Arbeitskammer 7 ermöglicht, ist an einem auf einem durchgehenden, mittig angeordneten Kraftübertragungsbolzen 14 geführten, mit dem Eingangsglied 4 in kraftübertragender Verbindung stehenden Ventilkolben 15 ausgebildet, dessen Rückkehrbewegung durch ein Querglied 17 begrenzt ist, das in Lösestellung am Gleitdichtring 16 axial anliegt. Der hülsenförmig ausgebildete Ventilkolben 15 steht in kraftübertragender Verbindung mit einer in einer zylindrischen Ausnehmung 46 des Steuergehäuses 8 angeordneten gummielastischen ringförmigen Reaktionsscheibe 13, die eine Übertragung sowohl der am Eingangsglied 4 eingeleiteten Betätigungskraft als auch der von der beweglichen Wand 5 aufgebrachten Verstärkungskraft auf eine Druckplatte 26 ermöglicht, das mit einem Hauptbremszylinderkolben 29 zusammenwirkt. Der Kraftübertragungsbolzen 14, der sich vorzugsweise durch das Steuergehäuse 8 axial hindurch erstreckt, ist mit einem dem Tandemhauptzylinder 2 zugewandten Ende in einem Verschlußteil 38 eingeschraubt, das den an der linken Verstärkergehäusehälfte 20 mittels Befestigungsschrauben 24 befestigten Tandemhauptzylinder 2 nach außen hin verschließt. Mit seinem anderen Ende ist der Kraftübertragungsbolzen 14 an einem Pedalbock 44 verankert, auf dem das Betätigungspedal 30 schwenkbar gelagert ist und der über Befestigungselement 31,32 an der in der Zeichnung rechts dargestellten Verstärkergehäusehälfte 21 befestigt ist, so daß bei der Betätigung eine Übertragung von durch den im Tandemhauptzylinder 2 sich aufbauenden Druck verursachten Reaktionskräften direkt vom Hauptzylinder 2 auf die Karosseriewand 45 erfolgen kann. Der Kraftübertragungsbolzen 14 verläuft im Wirkungsbereich des Betätigungspedals 30 zwischen zwei im Abstand parallel zueinander verlaufenden Armen 42,43 des Betätigungspedals 30, während sowohl die Reaktionsscheibe 13 als auch die Druckplatte 26 auf einer auf dem Kraftübertragungsbolzen 14 verschiebbar geführten rohrförmigen Hülse 25 angeordnet sind, deren radiale Erweiterung 47 einen Dichtring 48 aufnimmt. Denkbar sind selbstverständlich auch andere Gestaltungen des Betätigungspedals, wie beispielsweise ein Pedal mit einer den Kraftübertragungsbolzen 14 aufnehmenden Öffnung bzw. ein mit einem flachen Arm versehenes Pedal, das mit einem geschlitzten Kraftübertragungsbolzen zusammenwirkt. Die Übertragung der Ausgangskraft des Unterdruckbremskraftverstärkers 1 auf den Tandemhauptzylinderkolben 29 erfolgt dabei über zwei zwischen dem Tandemhauptzylinderkolben 29 und der Druckplatte 26 symmetrisch parallel zum Kraftübertragungsbolzen 14 angeordnete stabförmige Teile 18,19.

Bei der in Fig. 3 gezeigten Ausführungsform der Erfindung ist das dem Hauptzylinder 2 zugewandte Ende des Kraftübertragungsbolzens 14 in ein topfförmiges Teil 40 eingeschraubt, das mittels der den Hauptzylinder 2 am Verstärkergehäuse 3 bzw. 20 haltenden Befestigungsschrauben mit der Verstärkergehäusehälfte 20 verschraubt ist. Zu diesem Zweck ist das topfförmige Teil 40 mit einem radialen Kragen 41 versehen, an dem eine die bewegliche Wand 5 entgegen der Betätigungsrichtung vorspannende Rückstellfeder 39 abgestützt ist. Zwischen dem Kraftübertragungsbolzen 14 und dem Teil 40 sind jedoch auch andere Verbindungsarten denkbar, wie beispielsweise eine Lancierung, eine Bajonettverbindung u.dgl., wobei auch eine einteilige Ausführung des topfförmigen Teiles 40 mit der hauptzylinderseitigen Verstärkergehäusehälfte 20 in Frage kommt.

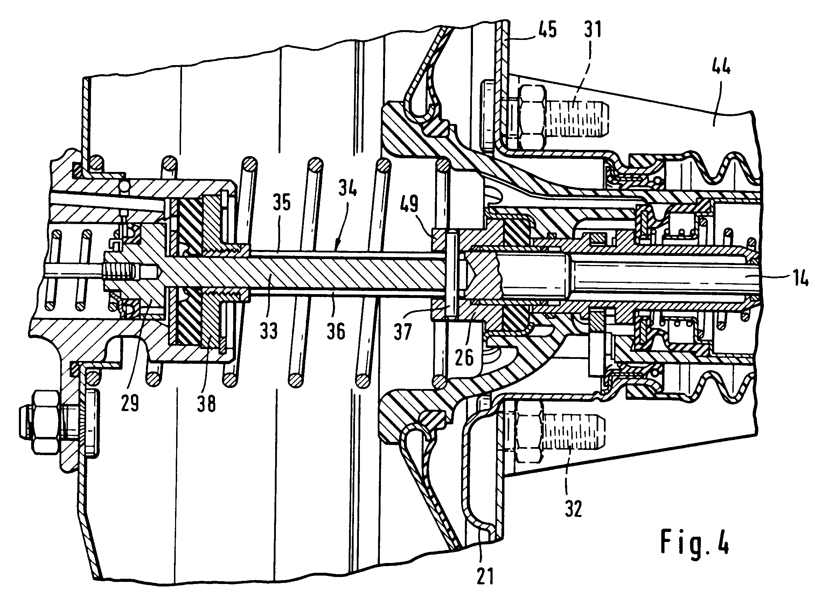

Bei der in Fig. 4 dargestellten Ausführungsform der Erfindung erfolgt die Befestigung der Betätigungseinheit 1,2 an der Karosseriewand 45 mittels der den Pedalbock 44 haltenden Befestigungselemente 31,32, wobei die Karosseriewand 45 zwischen der rechten Verstärkergehäusehälfte 21 und dem Pedalbock 44 eingeklemment ist. Der Kraftübertragungsbolzen 14 ist in seinem aus dem Steuergehäuse 8 herausragenden Abschnitt 34 hohlzylindrisch ausgebildet und weist in diesem Bereich zwei radial gegenüberliegende axiale Schlitze 35,36 auf. Die Übertragung der Ausgangskraft des Unterdruckbremskraftverstärkers 1 auf den Tandemhauptzylinderkolben 29 erfolgt bei dieser Ausführungsvariante mittels eines bolzenförmigen Teiles 33, das im dargestellten Beispiel durch eine axiale Verlängerung des Hauptzylinderkolbens 29 gebildet ist. Das im Abschnitt 34 im Kraftübertragungsbolzen 14 geführte Teil 33 liegt axial an mit einem in den Schlitzen 35,36 geführten Querstift 37, der in einem zylindrischen Fortsatz 49 der Druckplatte 26 senkrecht angeordnet ist, so daß zwischen beiden Teilen 33,37 eine kraftübertragende Verbindung besteht.

Die Funktion der erfindungsgemäßen Betätigungseinheit 1,2 ist dem auf dem einschlägigen Gebiet tätigen Fachmann geläufig und braucht deshalb nicht ausführlich erörtert zu werden.

### Bezugszeichenliste

- 1: Bremskraftverstärker
- 2: Hauptbremszylinder
- 3: Verstärkergehäuse
- 4: Eingangsglied
- 5: bewegliche Wand
- 6: Unterdruckkammer
- 7: Arbeitskammer
- 8: Steuergehäuse
- 9: Steuerventil
- 10: Dichtsitz
- 11: Dichtsitz
- 12: Ventilkörper
- 13: Reaktionsscheibe
- 14: Bolzen
- 15: Ventilkolben
- 16: Gleitdichtring
- 17: Querglied
- 18: stabförmiges Teil
- 19: stabförmiges Teil
- 20: Gehäusehälfte
- 21: Gehäusehälfte
- 22: Membranteller
- 23: Rollmembran
- 24: Befestigungsschraube
- 25: Hülse
- 26: Druckplatte
- 27: Befestigungsmittel
- 28: Befestigungsmittel
- 29: Kolben
- 30: Betätigungspedal
- 31: Befestigungselement
- 32: Befestigungselement
- 33: Verlängerung
- 34: Abschnitt
- 35: Schlitz
- 36: Schlitz
- 37: Stift
- 38: Verschlußteil
- 39: Rückstellfeder
- 40: Teil
- 41: Kragen
- 42: Arm
- 43: Arm
- 44: Pedalbock
- 45: Karosseriewand
- 46: Ausnehmung
- 47: Erweiterung
- 48: Dichtung
- 49: Fortsatz

## Patentansprüche

1. Betätigungseinheit für eine hydraulische Kraftfahrzeugbremsanlage, bestehend aus einem pneumatischen Bremskraftverstärker (1), vorzugsweise einem Unterdruckbremskraftverstärker sowie einem dem Bremskraftverstärker wirkungsmäßig nachgeschalteten Hauptbremszylinder (2), wobei der Bremskraftverstärker (1) ein Verstärkergehäuse (3) aufweist, dessen Innenraum durch eine auf einem ein Steuerventil (9) aufnehmenden Steuergehäuse (8) befestigte bewegliche Wand (5) in zwei Kammern (6, 7) unterteilt ist und wobei ein mittig angeordnetes Kraftübertragungselement vorgesehen ist, das einerseits mit dem Hauptbremszylinder (2) und anderereits mit einer Karosseriewand (45) des Kraftfahrzeuges in kraftübertragender Verbindung steht, dadurch **gekennzeichnet**, daß das Kraftübertragungselement durch einen durchgehenden Bolzen (14) gebildet ist, der sich axial durch das Steuergehäuse (8) hindurch erstreckt.

2. Betätigungseinheit nach Anspruch 1, wobei das Steuerventil des Bremskraftverstärkers mittels eines mit einem Betätigungspedals zusammenwirkenden Ventilkolbens betätigbar ist, dadurch **gekennzeichnet**, daß der Ventilkolben (15) hülsenförmig ausgebildet, auf dem Bolzen (14) geführt ist und mit seinem Ende am Betätigungspedal (30) abgestützt ist.

3. Betätigungseinheit nach Anspruch 1 oder Anspruch 2, wobei der Bremskraftverstärker eine im Steuergehäuse angeordnete elastische Reaktionsscheibe aufweist, die über eine mit einem im Hauptbremszylinder geführten Kolben in kraftübertragender Verbindung stehende Druckplatte eine Übertragung der Ausgangskraft des Bremskraftverstärkers auf den Kolben ermöglicht, dadurch **gekennzeichnet**, daß die Reaktionsscheibe (13) sowie die Druckplatte (26) ringförmig ausgebildet und koaxial zum Bolzen (14) auf einer auf dem Bolzen (14) verschiebbar geführten Hülse (25) angeordnet sind.

4. Betätigungseinheit nach einem der Ansprüche 1 bis 3, dadurch **gekennzeichnet**, daß die Übertragung der Ausgangskraft auf den Kolben (29) mittels mindestens zweier symmetrisch parallel zum Bolzen (14) zwischen dem Kolben (29) und der Druckplatte (26) angeordneter stabförmiger Teile (18,19) erfolgt.

5. Betätigungseinheit nach einem der Ansprüche 1 bis 3, dadurch **gekennzeichnet**, daß die Übertragung der Ausgangskraft auf den Kolben (29) mittels eines bolzenförmigen Teils (33) erfolgt, das in einem, radial gegenüberliegende Schlitze (35,36) aufweisenden, hohlzylindrisch ausgebildeten Abschnitt (34) des Bolzens (14) geführt ist und an einem in der Druckplatte (26) senkrecht angeordneten Stift (37) axial anliegt.

6. Betätigungseinheit nach einem der vorhergehenden Ansprüche, dadurch **gekennzeichnet**, daß das dem Hauptbremszylinder (2) zugeordnete Ende des Bolzens (14) mit einem den Hauptbremszylinder (2) nach außen hin verschließenden Verschlußteil (38) verbunden ist.

7. Betätigungseinheit nach einem der vorhergehenden Ansprüche 1 bis 5, dadurch **gekennzeichnet**, daß das dem Hauptbremszylinder (2) zugeordnete Ende des Bolzens (14) mit einem topfförmigen Teil (40) verbunden ist, das das ins Verstärkergehäuse (3) hineinragende Ende des Hauptbremszylindergehäuses (2) aufnimmt und mit der hauptzylinderseitigen Verstärkergehäusehälfte (20) verbunden ist.

8. Betätigungseinheit nach Anspruch 7, dadurch **gekennzeichnet**, daß das topfförmige Teil (40) einen radialen Kragen (41) aufweist, der einerseits der Befestigung des Teiles (40) am Verstärkergehäuse (3) und andererseits als Anlage für eine die bewegliche Wand (5) entgegen der Betätigungsrichtung vorspannende Rückstellfeder (39) dient.

9. Betätigungseinheit nach Anspruch 7, dadurch **gekennzeichnet**, daß das topfförmige Teil (40) mit der hauptzylinderseitigen Verstärkergehäusehälfte (20) einteilig ausgebildet ist.

10. Betätigungseinheit nach einem der vorhergehenden Ansprüche, dadurch **gekennzeichnet**, daß das Betätigungspedal (30) gabelförmig ausgebildet ist und zwei parallel im Abstand zueinander angeordnete Arme (42,43) aufweist, zwischen denen der Bolzen (14) sich erstreckt.

11. Betätigungseinheit nach einem der vorhergehenden Ansprüche, dadurch **gekennzeichnet**, daß das Betätigungspedal (30) an einem am Verstärkergehäuse (3) befestigten Pedalbock (44) schwenkbar gelagert ist.

12. Betätigungseinheit nach Anspruch 11, dadurch **gekennzeichnet**, daß im montierten Zustand der Betätigungeinheit (1,2) an der Karosseriewand (45) diese zwischen dem Verstärkergehäuse (3) und dem Pedalbock (44) eingeklemmt ist.

13. Betätigungseinheit nach Anspruch 11, dadurch **gekennzeichnet**, daß der Karosseriewand (45) zugeordnete Befestigungsmittel (27,28) am Umfang des Verstärkergehäuses (3) ausgebildet sind.

14. Betätigungseinheit nach einem der vorhergehenden Ansprüche, dadurch **gekennzeichnet**, daß das dem Hauptbremszylinder (2) abgewandte Ende des Bolzens (14) am Pedalbock (44) verankert ist.

15. Betätigungseinheit nach einem der vorhergehenden Ansprüche, dadurch **gekennzeichnet**, daß ein die Ruhestellung des Ventilkolbens (15) festlegendes Querglied (17) vorgesehen ist, das an einem das Verstärkergehäuse (3) nach außen hin abdichtenden Dichtring (16) axial anliegt.

## Claims

1. An actuating unit for a hydraulic brake system for automotive vehicles including a pneumatic brake power booster (1), which is preferably a vacuum brake power booster, and a master brake cylinder (2) inserted after the brake power booster in terms of effect, the brake power booster (1) including a booster housing (3), the interior of which is subdivided into two chambers (6,7) by a movable wall (5) which is attached to a control housing (8) accommodating a control valve (9), and a centrally arranged force-transmitting element being provided which is in force-transmitting connection with the master brake cylinder (2), on the one hand, and a vehicle body wall (45) of the automotive vehicle, on the other hand,
**characterised** in that the force-transmitting element is a continuous bolt (14) which extends in an axial direction through the control housing (8).

2. An actuating unit as claimed in claim 1, the control valve of the brake power booster being operable by means of a valve piston which interacts with an actuating pedal,
**characterised** in that the valve piston (15), having a sleeve-shaped design, is guided on the bolt (14) and, with its end, is supported at the actuating pedal (30).

3. An actuating unit as claimed in claim 1 or claim 2, the brake power booster including an elastic reaction disc which is arranged in the control housing and permits transmitting the output force of the brake power booster to the piston by means of a pressure plate that is in force-transmitting connection with a piston guided in the master brake cylinder,
**characterised** in that the reaction disc (13) and the pressure plate (26) have an annular design and are positioned coaxially relative to the bolt (14) on a sleeve (25) which is slidably guided on the bolt (14).

4. An actuating unit as claimed in any one of claims 1 to 3,
**characterised** in that the output force is transmitted to the piston (29) by means of at least two rod-shaped elements (18,19) which are arranged symmetrically in parallel to the bolt (14) between the piston (29) and the pressure plate (26).

5. An actuating unit as claimed in any one of claims 1 to 3,
**characterised** in that the output force is transmitted to the piston (29) by means of a bolt-shaped element (33), which is guided in a hollow-cylindrical section (34) of the bolt (14) having radially opposed slots (35,36), and which is in axial abutment against a pin (37) positioned perpendicularly in the pressure plate (26).

6. An actuating unit as claimed in any one of the preceding claims,
**characterised** in that the end of the bolt (14), which is associated with the master brake cylinder (2), is connected to a closure element (38) closing the master brake cylinder (2) towards the outside.

7. An actuating unit as claimed in any one of the preceding claims 1 to 5,
**characterised** in that the end of the bolt (14) associated with the master brake cylinder (2) is connected to a bowl-shaped part (40), in which the end of the master brake cylinder housing (2) projecting into the booster housing (3) is received, and is connected to the booster housing half (20) close to the master cylinder.

8. An actuating unit as claimed in claim 7,
**characterised** in that the bowl-shaped part (40) has a radial collar (41) which serves to fasten the part (40) to the booster housing (3), on the one hand, and, on the other hand, serves as an abutment for a resetting spring (39) biassing the movable wall (5) in opposition to the actuating direction.

9. An actuating unit as claimed in claim 7,
**characterised** in that the bowl-shaped part (40) is formed in one part with the booster housing half (20) close to the master cylinder.

10. An actuating unit as claimed in any one of the preceding claims,
**characterised** in that the actuating pedal (30) is of fork-shaped design and includes two parallel arms (42, 43) spaced from each other, the bolt (14) extending between the arms.

11. An actuating unit as claimed in any one of the preceding claims,
**characterised** in that the actuating pedal (30) is pivotally supported at a pedal assembly (44) mounted on the booster housing (3).

12. An actuating unit as claimed in claim 11,
**characterised** in that, in the mounted condition on the vehicle body wall (45), the actuating unit (1,2) is clamped in between the booster housing and the pedal assembly (44).

13. An actuating unit as claimed in claim 11,
**characterised** in that a fastening means (27,28) associated with the vehicle body wall (45) is provided at the periphery of the booster housing (3).

14. An actuating unit as claimed in any one of the preceding claims,
**characterised** in that the end of the bolt (14) remote from the master brake cylinder (2) is anchored at the pedal assembly (44).

15. An actuating unit as claimed in any one of the preceding claims,
**characterised** in that a transverse member (17) defines the inactive position of the valve piston (15) and is in axial abutment against a ring seal (16) sealing the booster housing (3) towards the outside.

## Revendications

1. Unité d'actionnement, pour système de freinage hydraulique pour véhicule automobile, constituée d'un amplificateur de force de freinage (1) pneumatique, de préférence un amplificateur de force de freinage à dépression, et d'un maître-cylindre de frein (2) monté en aval de l'amplificateur de force de freinage en ce qui concerne son action, l'amplificateur de force de freinage (1) comprenant un boîtier d'amplificateur (3) dont la cavité intérieure est divisée en deux chambres (6, 7) par une paroi mobile (5) fixée à un boîtier de commande (8) servant à loger une valve de commande (9), tandis qu'il est prévu un élément de transmission de force, à disposition centrale, qui est en liaison de transmission de force d'une part avec le maître-cylindre de frein (2) et d'autre part avec une paroi de carrosserie (45) du véhicule automobile, caractérisée en ce que l'élément de transmission de force est formé d'une tige continue qui traverse axialement le boîtier de commande.

2. Unité d'actionnement selon la revendication 1, dans laquelle la valve de commande de l'amplificateur de force de freinage est agencée de façon à pouvoir être actionnée au moyen d'un piston de valve coopérant avec une pédale d'actionnement, caractérisée en ce que le piston de valve (15) est réalisé en forme de manchon, est guidé sur la tige (14) et prend appui par son extrémité sur la pédale d'actionnement (30).

3. Unité d'actionnement selon la revendication 1 ou la revendication 2, dans laquelle l'amplificateur de force de freinage comprend un disque élastique de réaction qui est disposé dans le boîtier de commande et qui permet la transmission de la force de sortie de l'amplificateur de force de freinage sur le piston par l'intermédiaire d'une plaquette de poussée qui est en liaison de transmission de force avec un piston guidé dans le maître-cylindre de frein, caractérisée en ce que le disque de réaction (13) et la plaquette de poussée (26) ont une forme annulaire et sont disposés, suivant le même axe que la tige (14), sur un fourreau (25) guidé d'une manière coulissante sur la tige (14).

4. Unité d'actionnement selon l'une des revendications 1 à 3, caractérisée en ce que la transmission de la force de sortie au piston (29) a lieu au moyen d'au moins deux parties en forme de barre (18, 19) disposées, parallèlement à la tige (14) et d'une manière symétrique, entre le piston (29) et la plaquette de poussée (26).

5. Unité d'actionnement selon l'une des revendications 1 à 3, caractérisée en ce que la transmission de la force de sortie au piston (29) a lieu au moyen d'une pièce en forme de tige (33) qui est guidée dans une section cylindrique creuse (34) de la tige (14), cette section comportant des fentes (35, 36) diamétralement opposées, et qui prend axialement appui sur une broche (37) disposée perpendiculairement dans la plaquette de poussée (26).

6. Unité d'actionnement selon l'une des revendications précédentes, caractérisée en ce que l'extrémité de la tige (14) qui est associée au maître-cylindre de frein (2) est reliée à une pièce de fermeture (38) qui ferme le maître-cylindre de frein (2) vers l'extérieur.

7. Unité d'actionnement selon l'une des revendications précédentes 1 à 5, caractérisée en ce que l'extrémité de la tige (14) qui est associée au maître-cylindre de frein (2) est reliée à une pièce en forme de cuvette (40) qui reçoit l'extrémité du boîtier de maître-cylindre de frein (2) qui fait saillie dans le boîtier d'amplificateur (3), cette pièce en forme de cuvette (40) étant reliée à la moitié de boîtier d'amplificateur (20) située du côté du maître-cylindre.

8. Unité d'actionnement selon la revendication 7, caractérisée en ce que la pièce en forme de cuvette (40) comporte une collerette radiale (41) qui d'une part sert à fixer la pièce (40) au boîtier d'amplificateur (3) et sert d'autre part de butée pour un ressort de rappel (39) qui soumet la paroi mobile (5) à une précontrainte dand le sens opposé au sens d'actionnement.

9. Unité d'actionnement selon la revendication 7, caractérisée en ce que la pièce en forme de cuvette (40) est réalisée d'une pièce avec la moitié de boîtier d'amplificateur (20) située du côté du maître-cylindre.

10. Unité d'actionnement selon l'une des revendications précédentes, caractérisée en ce que la pédale d'actionnement (30) est en forme de fourche et comporte deux bras (42, 43) qui sont disposés parallèlement à distance l'un de l'autre et entre lesquels la tige (14) s'étend.

11. Unité d'actionnement selon l'une des revendications précédentes, caractérisée en ce que la pédale d'actionnement (30) est montée d'une manière basculante sur un support de pédale (44) fixé sur le boîtier d'amplificateur (3).

12. Unité d'actionnement selon la revendication 11, caractérisée en ce qu'à l'état monté de l'unité d'actionnement (1, 2) sur la paroi de carrosserie (45), cette dernière est serrée entre le boîtier d'amplificateur (3) et le support de pédale (44).

13. Unité d'actionnement selon la revendication 11, caractérisée en ce que les moyens de fixation (27, 28) associés à la paroi de carrosserie (45) sont réalisés à la périphérie du boîtier d'amplificateur (3).

14. Unité d'actionnement selon l'une des revendications précédentes, caractérisée en ce que l'extrémité de la tige (14) située à l'opposé du maître-cylindre de frein (2) est ancrée sur le support de pédale (44).

15. Unité d'actionnement selon l'une des revendications précédentes, caractérisée en ce qu'il est prévu un organe transversal (17) qui fixe la position de repos du piston de valve (15) et qui prend appui axialement sur une bague d'étanchéité (16) qui assure l'étanchéité du boîtier d'amplificateur (3) vers l'extérieur.
